(19) Europäisches Patentamt
European Patent Office
Office européen des brevets

(11) Numéro de publication : **0 136 226**
**B1**

(12) # FASCICULE DE BREVET EUROPÉEN

(45) Date de publication du fascicule du brevet : **11.11.87**

(51) Int. Cl.[4] : **C 08 G 16/02**, C 08 J 5/24

(21) Numéro de dépôt : **84401786.3**

(22) Date de dépôt : **11.09.84**

(54) **Résines polystyrylpyridines à ténacité améliorée et matériau composite comprenant ces résines.**

(30) Priorité : **12.09.83 FR 8314487**

(43) Date de publication de la demande : **03.04.85 Bulletin 85/14**

(45) Mention de la délivrance du brevet : **11.11.87 Bulletin 87/46**

(84) Etats contractants désignés : **CH DE FR GB LI**

(56) Documents cités : **FR-A- 2 261 296**

(73) Titulaire : **SOCIETE NATIONALE DES POUDRES ET EXPLOSIFS**
**12, quai Henri IV**
**F-75181 Paris Cedex 04 (FR)**

**Office National d'Etudes et de Recherches Aérospatiales (O.N.E.R.A.)**
**29 Avenue de la Division Leclerc**
**F-92320 Châtillon-sous-Bagneux (FR)**

(72) Inventeur : **Chevalier, Sammy**
**143 Boulevard Lefebvre**
**F-75015 Paris (FR)**

**EP 0 136 226 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention concerne des résines contenant un produit de polycondensation d'au moins un dérivé dialdéhyde aromatique avec au moins un dérivé pyridinique comportant au moins deux substituants méthylés réactifs, ces résines étant généralement appelées résines polystyrylpyridines ou résines PSP.

L'invention a plus particulièrement pour objet des résines polystyrylpyridines à structure modifiée pour améliorer les propriétés mécaniques de ces résines, notamment à température ambiante tout en conservant les propriétés de thermostabilité et de tenue à l'humidité des résines polystyrylpyridines non modifiées.

Les brevets français n° 2 261 296 et 2 378 052 décrivent des procédés de préparation de résines polystyrylpyridines par polycondensation de dialdéhydes aromatiques tel que l'aldéhyde téréphtalique avec des dérivés méthylés de la pyridine telle que la collidine, notamment la collidine industrielle.

Ces résines sont intéressantes car elles présentent une thermostabilité et une tenue à l'humidité excellentes.

Ainsi, comme indiqué dans les articles de Bloch et Ropars « PSP résines, new thermosetting binder for advanced composites » 23rd National SAMPE Symposium, ANAHEIN, mai 1978) et de Malassine B. (PSP 6022 resin : a matrice for thermostable fire resistant, high performance composite materials, ICCH 3 — JNC Paris août 1980), ces résines sont employées comme matrice dans des matériaux composites, ces matériaux présentant de bonnes propriétés mécaniques.

Toutefois, les matériaux composites et notamment les stratifiés obtenus avec des tissus de carbone et une résine PSP présentent des propriétés mécaniques (flexibilité, résistance au cisaillement) estimées bonnes à température élevée (250 °C) et au cours du vieillissement, mais par contre faibles à température moyenne et notamment à température ambiante.

Ces faibles propriétés mécaniques à température moyenne peuvent s'èxpliquer par le fait que la résine PSP après réticulation, forme une matrice trop rigide qui est donc cassante à température ambiante. Cette fragilité provoque des microfissures dans le stratifié, microfissures qui ont tendance à se propager et à favoriser l'oxydation et la dégradation de la résine.

La présente invention a pour but de remédier à ces inconvénients, en procurant une résine du type polystyrylpyridine comportant une chaîne modifiée par incorporation de segments comprenant des points de flexibilisation. Cette flexibilisation de la chaîne permet d'assouplir la matrice après réticulation de la résine et donc de diminuer sa fragilité.

A cet effet, l'invention propose une résine appelée ci-après résine polystyrylpyridine contenant un produit de polycondensation d'au moins deux substituants méthylés réactifs, ladite résine ayant la formule générale I suivante :

$$U_x\ V_y\ W_z \qquad (I)$$

dans laquelle :

U représente le motif :

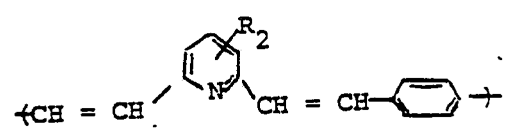

V représente le motif :

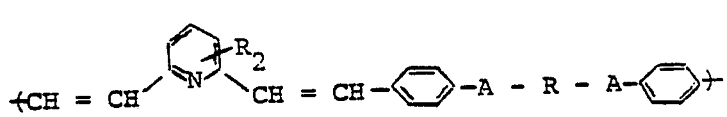

W représente le motif :

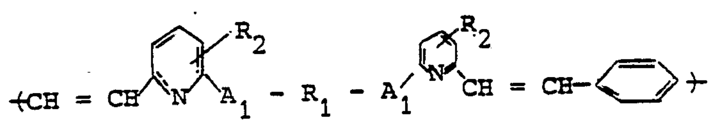

dans lesquels :

R, $R_1$ sont identiques ou différents et représentent un segment de chaîne constitué par des radicaux hydrocarbonés pouvant comporter des hétéroatomes,

A, $A_1$ sont identiques ou différents et représentent un atome ou groupement formant un pont entre le segment R, $R_1$ et un noyau aromatique de la chaîne styrylpyridine, comportant des liaisons stéréomobiles,

$R_2$ représente l'hydrogène, un radical méthyl ou éthyl

x, y, z représentent des nombres entiers pouvant être égaux à 0, la somme y + z étant au moins égale à 1.

On entend par pont comportant des liaisons stéréomobiles, ou « pont à liaisons stéréomobiles », un ensemble formé par un atome ou un groupement (A, $A_1$) incorporé dans une chaîne, permettant une variation de l'édifice moléculaire autour dudit ensemble, en fonction de l'environnement de la chaîne, ou sous l'effet d'une excitation.

Dans un des modes préférés de l'invention, le pont à liaisons stéréomobiles est un pont éther —O—, les symboles A, $A_1$ représentant l'atome d'oxygène.

Selon une autre caractéristique de l'invention les segments R, $R_1$, sont des groupements constitués par des radicaux hydrocarbonés qui, pour ne pas ou sensiblement pas affecter les propriétés inhérentes aux résines polystyrylpyridines, doivent présenter une bonne thermostabilité et bonne tenue à l'humidité.

Ainsi, les segments R, $R_1$ représentent soit un groupement hydrocarboné aliphatique saturé, substitué ou non, dont la chaîne principale comporte 1 à 10 atomes de carbone, soit un groupement constitué par des radicaux hydrocarbonés liés entre eux par des hétéroatomes formant également un « pont à liaisons stéréomobiles » entre deux parties dudit segment tel que, par exemple, un pont éther, un pont sulfoné ou analogue.

Les segments R, $R_1$ qui peuvent être identiques ou différents sont choisis parmi le groupe de composés ayant les formules suivantes :

a) $-(-CH_2-)-_n$ n étant un nombre entier compris entre 1 et 10

b) $-(-CH_2-CH_2-O-)-_m\ CH_2-CH_2-$

m étant un nombre entier compris entre 1 et 5.

c) 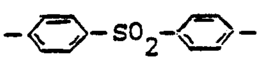

les segments de formule a, b peuvent également comporter des substituants, par exemple des radicaux méthyles, sur les groupements méthylidène ($-CH_2-$) de la chaîne. Toutefois, ces substituants ne doivent pas sensiblement diminuer la thermostabilité et la tenue à l'humidité du segment R, $R_1$.

Pour obtenir les résines de l'invention, les segments R, $R_1$ et les ponts —A—, —$A_1$— sont incorporés soit dans un dérivé dialdéhyde aromatique soit dans un dérivé pyridinique, ou dans les deux, ces dérivés étant condensés entre eux ou avec un dérivé aldéhyde aromatique non modifié tel que, par exemple, l'aldéhyde téréphtalique, ou un dérivé pyridinique méthylé telle que par exemple, la collidine.

Le dérivé dialdéhyde aromatique modifié a, selon l'invention, la formule générale II suivante :

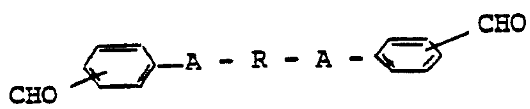 (II)

A, R ont les significations décrites ci-dessus.

Le dérivé pyridinique a, selon l'invention, la formule générale III suivante :

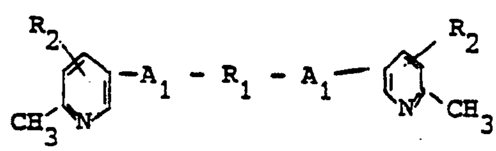 (III)

$A_1$, $R_1$, $R_2$ ayant les significations décrites ci-dessus.

Dans le mode de réalisation préféré de l'invention, on utilise un mélange de dérivés dialdéhydes aromatiques contenant au moins un dialdéhyde modifié de formule (II), de préférence avec une concentration molaire de ce dialdéhyde modifié inférieure à 50 %. On utilisera, avantageusement, ce dialdéhyde modifié en mélange avec l'aldéhyde téréphtalique.

De manière identique, on utilisera le dérivé pyridinique modifié de formule III, de préférence en mélange avec un ou plusieurs dérivés pyridiniques, notamment avec des dérivés pyridiniques telle que la collidine, la concentration molaire du dérivé pyridinique de formule III dans le mélange étant avantageusement inférieure à 50 %.

Les exemples ci-dessous donnés uniquement à titre indicatif illustrent clairement l'invention ainsi que les procédés de fabrication des résines de l'invention, ses propriétés et utilisations.

Les dialdéhydes modifiés de formule II et les dérivés pyridiniques modifiés de formule III peuvent être préparés par des procédés analogues.

Des procédés de préparation, notamment des dialdéhydes ont été décrits par de nombreux auteurs, et par exemple par R. Jaunin ; J. Magnenat (Helv. Chim. Acta 42 328-34 ; 1959) ; B. Hugh, Donahoe and al (J. Org. Chem. 26, 474-476 ; 1961) et J.P. William, Neish (Rec. trav. Chim. 66, 433-442 ; 1947).

Ces dialdéhydes sont obtenus par condensation du sel de sodium ou de potassium de l'hydroxyben-

zaldéhyde avec un dihalogénure de formule générale IV

$$X—R—X \qquad (IV)$$

dans laquelle X représente un halogène et R a la signification indiquée ci-dessus.

De manière analogue, les dérivés pyridiniques de formule III sont obtenus par condensation du sel de sodium ou de potassium d'une hydroxyméthyl pyridine avec un dihalogénure de formule générale V

$$X—R_1—X \qquad (V)$$

dans laquelle X et $R_1$ ont les significations ci-dessus.

On décrira ci-dessous, à titre d'exemple, la préparation du polyméthylène dioxydibenzaldéhyde selon le procédé publié par Jaunin.

Ce composé est obtenu par addition, en 1 heure, de 1 mole de dihalogénure de formule IV, par exemple un dibromoalkyle, à 2 moles de formylphénate de sodium ou de potassium, en présence de 800 $cm^3$ de DMF comme solvant. Le formylphénate de sodium ou potassium peut être obtenu par le procédé décrit par Greber (Makromol. Chem. 154 à 157, 1956).

Le milieu est maintenu à reflux pendant l'addition du dihalogénure d'alkyle.

Après deux heures de chauffage à reflux, sous agitation, le mélange est refroidi puis versé dans 5 litres d'eau glacée. Le polyméthylène dioxy-dibenzaldéhyde se sépare du milieu aqueux en formant une phase huileuse qui cristallise. Il a été remarqué que la cristallisation du dialdéhyde est plus ou moins rapide selon la nature du segment R.

Le dialdéhyde est ensuite purifié par recristallisation dans un alcool tel que l'éthanol ou l'isopropanol.

On a ainsi préparé des dioxyaldéhydes de formule générale suivante :

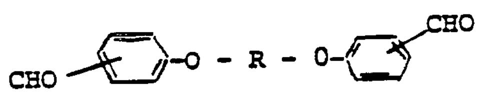

avec R correspondant à $—CH_2—$ ; $—(CH_2)_3—$ ; $—(CH_2)_6—$ ; $—CH_2—CH_2—O—CH_2—CH_2—$ ; et $-(-CH_2—CH_2—O-)_2—CH_2—CH_2—$ ; les radicaux —CHO étant soit en position para soit en position ortho.

Ces composés sont identifiés par les méthodes d'analyse RMN et spectrographie Infra-rouge et par détermination de leur point de fusion, par exemple, au moyen d'un analyseur thermique.

On décrira maintenant, à titre d'exemple, un procédé de fabrication des résines de l'invention. Ce procédé est similaire à celui utilisé pour la synthèse des résines polystyrylpyridines connues, obtenues par polycondensation de l'aldéhyde téréphtalique avec un dérivé pyridine méthylée telle que la collidine. Ce procédé est décrit dans les brevets français n° 2 261 296 et 2 378 052 mentionnés ci-dessus.

Pour obtenir les résines de l'invention, on remplace totalement ou partiellement l'aldéhyde téréphtalique par une quantité équivalente en moles du dérivé dialdéhyde aromatique de formule II et/ou la collidine par une quantité équivalente en mole de dérivé pyridinique de formule III.

A titre d'illustration du procédé de l'invention, on donnera ci-dessous des exemples de fabrication de résines polystyrylpyridines obtenues par condensation de la collidine avec des mélanges de dialdéhydes, constitués par de l'aldéhyde téréphtalique et un dialdéhyde de formule II. Ces exemples sont émis à titre indicatif uniquement.

## Exemples 1 à 13

Dans ces exemples, le mélange de dialdéhydes contient un aldéhyde téréphtalique et un aldéhyde de formule II dans laquelle R représente le groupement $(—CH_2—)_n$ avec n égal à 1, 3 ou 6. Le mode opératoire détaillé, donné ci-dessous, est réalisé avec un mélange de 75 % en mole de dialdéhyde téréphtalique et 25 % en mole de diformyl 2,2' diphénoxypropane.

On mélange, dans un réacteur thermostaté, muni d'une agitation, d'un thermomètre et d'un appareil de Dean et Stark surmonté d'un réfrigérant, 111 g du mélange de dialdéhydes (46 g ou 0,162 mole de diformyl-2,2' diphénoxypropane et 65 g ou 0,485 mole d'aldéhyde téréphtalique) avec 90 g de collidine technique contenant 72 % en moles de triméthyl 2,4,6 pyridine et 3 g ou 0,03 mole d'acide sulfurique comme catalyseur.

La réaction de polycondensation est effectuée à 180 °C, son avancement étant contrôlé par la mesure du volume d'eau récupéré dans l'appareil de Dean et Stark.

Quand le volume d'eau récupérée atteint 11,7 $cm^3$, ce qui correspond à un avancement de la réaction de condensation de 50 %, la réaction est arrêtée par une distillation rapide, sous un léger vide, des réactifs excédentaires (environ 10 à 15 minutes de distillation).

Plusieurs résines ont été préparées selon ce procédé, en faisant varier la formulation du mélange de dialdéhydes aromatiques, la nature du dialdéhyde de formule II, et le catalyseur, par l'utilisation d'acide paratoluène sulfonique (APTS) à la place de $H_2SO_4$. Les formulations de ces différentes résines sont données dans le tableau 1 ci-après.

Tableau 1 : Préparation des résines de l'invention

| Exemples | 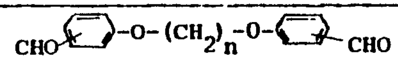 | | | aldéhyde téréphtalique | Collidine (g) | Durée de la réaction (50%avancement) | Rendement % |
|---|---|---|---|---|---|---|---|
| | n | Position de -CHO | nombre de moles | nombre de moles | | | |
| 1 (1) | 1 | O | 0,16 | 0,5 | 90 | 1H 30 | 78,7 |
| 2 (1) | 1 | O | 0,3 | 0,3 | 83,1 | 1H 45 | 77 |
| 3 (1) | 1 | O | 0,5 | - | 70,2 | 2H 15 | 77,8 |
| 4 (1) | 1 | P | 0,16 | 0,5 | 90 | 1H 30 | 72,4 |
| 5 (1) | 1 | P | 0,3 | 0,3 | 83,1 | 1H 30 | 72,4 |
| 6 (1) | 3 | O | 0,16 | 0,49 | 90 | 2H 15 | 81,5 |
| 7 (1) | 3 | O | 0,29 | 0,29 | 79,7 | 3H 30 | 84,6 |
| 8 (2) | 3 | O | 0,47 | - | 65,6 | 4H | 84 |
| 9 (2) | 3 | P | 0,16 | 0,49 | 90 | 6H 30 | 79,7 |
| 10 (2) | 3 | P | 0,32 | 0,32 | 90 | 10H | 79,7 |
| 11 (1) | 3 | P | 0,32 | 0,32 | 90 | 3H | 75,8 |
| 12 (1) | 6 | O | 0,25 | 0,75 | 139 | 2H 40 | 85,6 |
| 13 (1) | 6 | O | 0,50 | 0,50 | 139 | 3H 10 | 87,8 |

(1) le catalyseur est $H_2SO_4$
(2) le catalyseur est l'APTS
O, P signifient position ortho et para respectivement

Exemples 14 à 17

Les résines sont fabriquées selon le même procédé que celui décrit dans les exemples 1 à 13. Toutefois le mélange de dialdéhydes aromatiques est constitué par l'aldéhyde téréphtalique et un aldéhyde de formule II dans laquelle R représente le groupement $-(-CH_2-CH_2-O-)-_mCH_2-CH_2-$ avec m égal à 1 ou 2.

De manière identique aux exemples 1 à 13, on réalise plusieurs résines en modifiant la formulation du mélange de dialdéhydes aromatiques. Les formulations de ces différentes résines sont données dans le tableau 2 ci-dessous.

Tableau 2 — Préparation des résines de l'invention

| Exemple (1) | 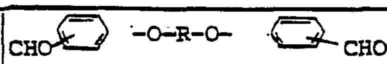 R : $-(CH_2-CH_2-O)-_m$ $CH_2-CH_2-$ | | | Aldéhyde téréphtalique | Collidine (g) | Durée de la réaction (50% avancement) | Rendement % |
|---|---|---|---|---|---|---|---|
| | m | Position de - CHO | Nombre de moles | Nombre de moles | | | |
| 14 | 1 | Ortho | 0,25 | 0,75 | 139 | 1 H 55 | 85,7 |
| 15 | 1 | Ortho | 0,50 | 0,50 | 139 | 4 H 00 | 80,6 |
| 16 | 2 | Ortho | 0,25 | 0,75 | 139 | 3 H 35 | 85,6 |
| 17 | 2 | Ortho | 0,50 | 0,50 | 139 | 4 H 45 | 88,3 |

(1) Le catalyseur est $H_2SO_4$.

Les résines préparées dans les exemples 1 à 17, ont été ensuite réticulées par un chauffage en étuve ventilée durant 4 heures à 200 °C, puis cuites pendant 4 heures à 255 °C.

La thermostabilité des résines réticulées a été évaluée d'une part par thermogravimétrie sous air et atmosphère d'azote, et d'autre part par la mesure de perte de poids d'éprouvettes de résine réticulée soumises à un vieillissement accéléré à 255 °C.

Les résultats obtenus sont rassemblés dans les tableaux 3a et 3b ci-après.

(Voir Tableau 3a page 7)

Tableau 3a — Thermostabilité des résines de l'invention

| Exemples N° (3) | % perte de poids à 350°C (thermogravimétrie) (I) | | % perte de poids (2) sur éprouvettes à 255°C | |
|---|---|---|---|---|
| | sous azote | sous air | après 500H | après 1000H |
| 1 | 7 | 8,3 | 1,78 | 3,6 |
| 2 | 8 | 10,5 | 3,16 | 8 |
| 3 | 15 | 16,4 | - | - |
| 4 | 6 | 5,6 | - | - |
| 5 | 9 | 10,5 | 3,46 | - |
| 6 | 6 | 6,2 | 2,05 | 5 |
| 7 | 9 | 10 | 2,74 | - |
| 8 | 10 | 8 | 2,57 | 8 |
| 9 | 7 | 7,3 | 1,96 | - |
| 10 | 7 | 8,6 | 2,59 | - |
| 11 | 9 | 7,2 | 2,86 | 8 |
| T (4) | | | 0,8 | 1,6 |

(1) mesures effectuées par thermogravimétrie sur 200 mg de résine au cours d'un chauffage de 20 à 650 °C avec une vitesse de chauffage d'environ 5 °C/mn.

(2) mesures effectuées sur éprouvettes de résine pure obtenues par moulage à 200 °C pendant 8 heures plus une post-cuisson de 17 heures à 250 °C.

(3) les nombres de référence correspondent aux nombres indiqués dans les tableaux 1 et 2.

(4) résine polystyrylpyridine non modifiée obtenue par polycondensation de l'aldéhyde téréphtalique sur la collidine.

Tableau 3b — Thermostabilité des résines des exemples 12 à 17

| Exemple | % perte de poids à 350° C (1) sous air |
|---|---|
| 12 | 7,8 |
| 13 | 5 |
| 14 | 7,2 |
| 15 | 12,4 |
| 16 | 11,3 |
| 17 | 14,2 |

(1) Mesures effectuées par thermogravimétrie sur 200 mg de résine au cours d'un chauffage de 20 à 650 °C avec une vitesse de chauffage d'environ 5 °C/mm.

Ces mesures montrent que la thermostabilité des résines modifiées par incorporation d'un segment $—O—(CH_2)_n—O—$ ou $—O-(-CH_2—CH_2—O-)-_m—CH_2—CH_2—O—$ est légèrement plus faible que la résine polystyrylpyridine non modifiée (T) et cela d'autant plus que la proportion de dialdéhydes aromatiques modifiés dans le mélange de dialdéhydes est plus élevée.

Toutefois cette thermostabilité est encore d'un niveau acceptable.

On a également testé ces résines en tant que résine d'imprégnation pour la réalisation de matériaux composite tels que des stratifiés avec tissu de carbone, tissu de verre ou analogue.

Pour former ces stratifiés on a, tout d'abord, dissous la résine dans un solvant tel que la méthyl éthylcétone ou le dichlorométhane, pour obtenir une solution à viscosité convenable pour réaliser l'imprégnation d'un tissu, par exemple d'un tissu de carbone ref. 40 830 commercialisé par la Société Stevens Genin (tissu à 340 g de fibres carbone Toray T 300 (marque commerciale) par mètre carré). On réalise ainsi des plaques de stratifié d'une épaisseur de 2 mm environ par empilement de 7 plis de préimprégné et moulage à la presse pendant 8 heures sous une pression de 10 bars et à une température de 200 °C.

Pour évaluer les propriétés mécaniques de chaque plaque ainsi obtenue, et plus particulièrement la fragilité de ces plaques à température élevée et à température ambiante, on étudie le comportement des stratifiés en flexion et au cisaillement en mesurant notamment la résistance $\sigma_c$ au cisaillement interlaminaire respectivement à une température de 20 °C et 250 °C.

Ces propriétés mécaniques ont été évaluées sur le stratifié avant une post-cuisson (PC), et après une post-cuisson de 16 heures à 250 °C. Les résultats sont mentionnés dans le tableau 4 ci-dessous.

Tableau 4 — Résistance au cisaillement interlaminaire

| Résine de l'exemple n° | $\sigma_c$ à 20° C avant P.C. (MPa) | $\sigma_c$ à 20° C après P.C. (MPa) | $\sigma_c$ à 250° C après P.C. (MPa) |
|---|---|---|---|
| 6 (2) | 69-63 | 48 | 37 |
| 7 | 65 | 46 | 34 |
| 6 (2) | 63 | 42 | 41 |
| 13 | 62 | 45 | 17 |
| 14 | 64 | 35 | 37 |
| 15 | 64 | 35 | 39 |
| 16 | 56 | 32 | 35 |
| 17 | 65 | 39 | 22 |
| T (1) | 55 | 35 | 37 |

(1) essai avec résine P.S.P. obtenue par polycondensation d'aldéhyde téréphtalique sur la collidine.

(2) 2 stratifiés différents formés avec une résine de formulation correspondant à celle indiquée au tableau 1 exemple 6.

De ce tableau, il apparaît que la résine PSP non modifiée (essai T) a des caractéristiques mécaniques à température ambiante (20 °C) inférieures à celles à température élevée (250 °C). Au contraire les stratifiés ayant comme matrice une PSP modifiée conforme à l'invention, présentent des propriétés mécaniques à température élevée sensiblement du même ordre que celles d'un stratifié à matrice PSP non modifiée, mais conservent ces propriétés mécaniques à température ambiante.

Ainsi, il a été trouvé après de nombreuses mesures que la résistance au cisaillement interlaminaire d'un stratifié ayant comme matrice une résine PSP non modifiée est comprise, à 250 °C, entre 34 et 37 MPa environ, et à 20 °C entre 32 et 35 MPa environ, tandis que pour un stratifié à matrice en résine de l'invention, cette résistance au cisaillement interlaminaire est comprise à 250 °C entre 37 et 43 MPa environ et entre 45 et 55 MPa environ à 20 °C.

En outre, les résines de l'invention conservent leurs propriétés mécaniques au cours de leur vieillissement.

De plus, les mesures de thermostabilité de ces stratifiés, par la mesure de perte de poids et de cisaillement à des températures élevées (200 °C et 250 °C), ont montré que ces résines conservent leurs propriétés mécaniques et présentent une faible perte de poids après un vieillissement à 200 °C de plusieurs milliers d'heures, ou après un vieillissement à 250 °C de plusieurs centaines d'heures.

Donc les résines de l'invention conservent les propriétés intéressantes de thermostabilité et tenue à l'humidité des résines polystyrylpyridines à base d'aldéhyde téréphtalique et de pyridine méthylée, mais présentent des propriétés mécaniques supérieures notamment à température ambiante.

Ces résines conviennent donc parfaitement pour former la matrice d'un matériau composite, tel qu'un stratifié.

**Revendications**

1. Résine contenant un produit de polycondensation d'au moins un dérivé dialdéhyde aromatique avec au moins un dérivé pyridinique comportant au moins deux substituants méthylés réactifs, caractérisée en ce que ladite résine a la forme générale (I) suivante :

$$U_x\ V_y\ W_z$$

dans laquelle :

U représente le motif

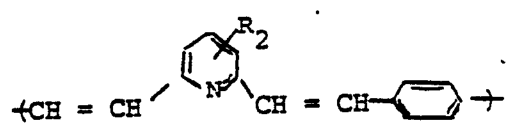

V représente le motif

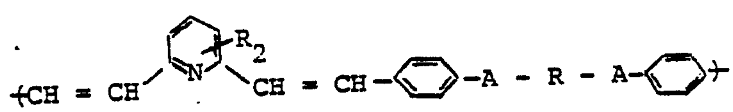

W représente le motif

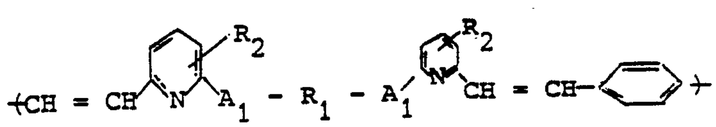

dans lesquels :

R, $R_1$ sont identiques ou différents ou représentent un segment de chaîne constitué par des radicaux hydrocarbonés et pouvant comporter des hétéroatomes,

A, $A_1$ sont identiques ou différents et représentent un atome ou groupement formant un pont entre le segment R, $R_1$ et un noyau aromatique de la chaîne styrylpyridine, comportant des liaisons stéréomobiles,

$R_2$ représente l'hydrogène, un radical méthyl ou éthyl.

x, y, z représentent des nombres entiers pouvant être égaux à 0, la somme y + z étant au moins égale à 1.

2. Résine selon la revendication 1, caractérisée, en ce que A, $A_1$ représente l'oxygène, le pont à liaisons stéréomobiles étant un pont éther.

3. Résine selon la revendication 1 ou 2, caractérisée en ce que R, $R_1$ représentent un groupement hydrocarboné aliphatique saturé, substitué ou non, dont la chaîne principale comprend de 1 à 10 atomes de carbone.

4. Résine selon la revendication 1 ou 2, caractérisée en ce que R, $R_1$ représentent un groupement

constitué par des radicaux hydrocarbonés liés entre eux par des hétéroatomes formant un pont à liaisons stéréomobiles tel qu'un pont éther, un pont sulfone.

5. Résine selon la revendication 3 ou 4, caractérisée en ce que R, $R_1$ sont choisis parmi le groupe de composés ayant comme formules :

a) $-(-CH_2-)-_n$, n étant un nombre entier compris entre 1 et 10

b) $-(-CH_2—CH_2—O-)-_mCH_2—CH_2—$, m étant un nombre entier compris entre 1 et 5

c) 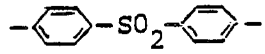

6. Résine selon l'une des revendications 1 à 5, caractérisée en ce que le dérivé dialdéhyde précité a la formule générale II suivante :

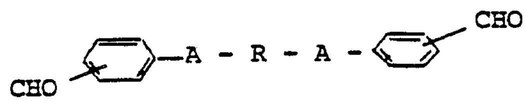
(II)

A et R ayant la signification décrite ci-dessus.

7. Résine selon l'une des revendications 1 à 6, caractérisée en ce que le dérivé pyridinique précité a la formule III suivante :

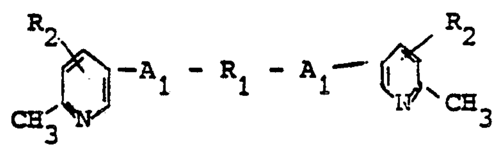
(III)

$A_1$, $R_1$, $R_2$ ayant la signification décrite ci-dessus.

8. Résine selon l'une des revendications précédentes, caractérisée en ce que le produit de polycondensation est obtenu à partir d'un mélange de dérivés dialdéhydes comportant au moins le dérivé de formule (II) précité.

9. Résine selon la revendication 8, caractérisée en ce que la concentration molaire du dérivé dialdéhyde de formule II dans le mélange précité de dérivés dialdéhydes est inférieure à 50 %.

10. Résine selon la revendication 8 ou 9, caractérisée en ce que le mélange précité de dérivés dialdéhydes comprend l'aldéhyde téréphtalique.

11. Résine selon l'une des revendications précédentes, caractérisée en ce que le produit de polycondensation est obtenu à partir d'un mélange de dérivés pyridiniques comportant le dérivé pyridinique de formule III précité.

12. Résine selon la revendication 11, caractérisée en ce que le mélange de dérivés pyridiniques précité comprend de la collidine.

13. Résine selon la revendication 11 ou 12, caractérisée en ce que la concentration molaire de dérivés pyridiniques de formule III dans le mélange précité de dérivés pyridiniques est inférieure à 50 %.

14. Matériau composite tel qu'un stratifié comportant un support tel qu'un tissu de carbone, de verre ou analogue, un mat ou des fibres, imprégné par une résine, caractérisée en ce que l'un des constituants de ladite résine est une résine selon l'une des revendications 1 à 13.

**Claims**

1. Resin containing a product of polycondensation of at least one aromatic dialdehyde derivative with at least one pyridine derivative containing at least two reactive methylated substituents, characterized in that the said resin has the following general form (I) :

$$U_x\ V_y\ W_z$$

in which :

U denotes the unit

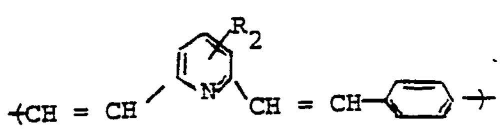

V denotes the unit

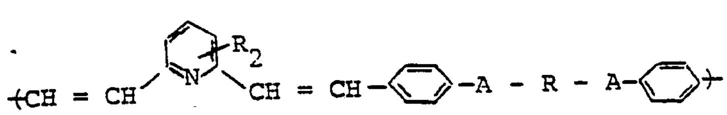

W denotes the unit

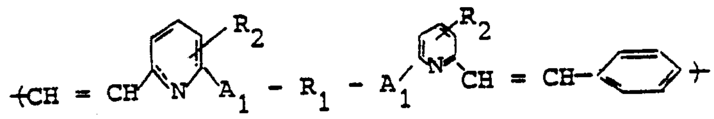

in which :

R, $R_1$ are identical or different and denote a chain segment consisting of hydrocarbon radicals and which can contain hetero atoms,

A, $A_1$ are identical or different and denote an atom or group forming a bridge between the segment R and an aromatic ring of the styrylpyridine chain, containing sterically mobile bonds,

$R_2$ denotes hydrogen or a methyl or ethyl radical, and

x, y, z denote integers which can be equal to 0, the sum $y + z$ being at least equal to 1.

2. Resin according to Claim 1, characterized in that A, A1 denote oxygen, the bridge containing sterically mobile bonds being an ether bridge.

3. Resin according to Claim 1 or 2, characterized in that R, $R_1$ denote a substituted or unsubstituted saturated aliphatic hydrocarbon group in which the principal chain comprises from 1 to 10 carbon atoms.

4. Resin according to Claim 1 or 2, characterized in that R, $R_1$ denote a group consisting of hydrocarbon radicals linked to one another by hetero atoms forming a bridge containing sterically mobile bonds, such as an ether bridge or a sulphone bridge.

5. Resin according to Claim 3 or 4, characterized in that R, $R_1$ are chosen from the group of compounds having the formulae :

a) $-(CH_2)_n-$, n being an integer between 1 and 10,

b) $-(CH_2-CH_2-O)_m-CH_2-CH_2-$, m being an integer between 1 and 5, and

c)

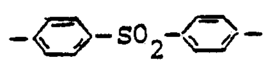

6. Resin according to one of Claims 1 to 5, characterized in that the abovementioned dialdehyde derivative has the following general formula II :

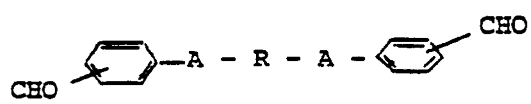

(II)

A and R having the meaning described above.

7. Resin according to one of Claims 1 to 6, characterized in that the abovementioned pyridine derivative has the following formula III :

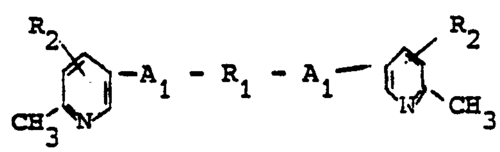

(III)

$A_1$, $R_1$ and $R_2$ having the meaning described above.

8. Resin according to any one of the preceding claims, characterized in that the polycondensation product is obtained from a mixture of dialdehyde derivatives containing at least the abovementioned derivative of formula (II).

9. Resin according to Claim 8, characterized in that the molar concentration of the dialdehyde derivative of formula II in the abovementioned mixture of dialdehyde derivatives is less than 50 %.

10. Resin according to Claim 8 or 9, characterized in that the abovementioned mixture of dialdehyde derivatives includes terephthalaldehyde.

11. Resin according to one of the preceding claims, characterized in that the polycondensation product is obtained from a mixture of pyridine derivatives containing the abovementioned pyridine derivative of formula III.

12. Resin according to Claim 11, characterized in that the abovementioned mixture of pyridine derivatives includes collidine.

13. Resin according to Claim 11 or 12, characterized in that the molar concentration of pyridine derivatives of formula III in the abovementioned mixture of pyridine derivatives is less than 50 %.

14. Composite material such as a laminate containing a support, such as a fabric of carbon, glass or the like, a mat or fibres, impregnated with a resin, characterized in that one of the constituents of the said resin is a resin according to one of Claims 1 to 13.

**Patentansprüche**

1. Kunstharz, enthaltend ein Polykondensationsprodukt mindestens eines aromatischen Dialdehyds mit mindestens einem Pyridinderivat mit mindestens zwei reaktiven Methylsubstituenten, dadurch gekennzeichnet, daß das Kunstharz die allgemeine Formel (I) aufweist :

$$U_x\ V_y\ W_z$$

wobei bedeuten :

U 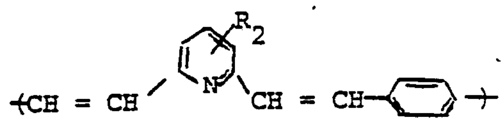

V 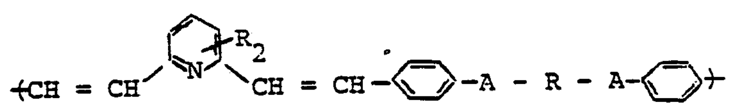

W 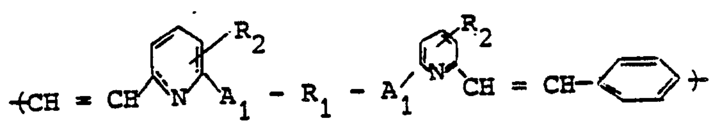

R, $R_1$, gleich oder verschieden, Kohlenwasserstoffkettenreste, die Heteroatome enthalten können,
A, $A_1$, gleich oder verschieden, ein Atom oder einen Rest, die eine Brücke zwischen dem Rest R und einem aromatischen Kern der Styrylpyridinkette bilden, mit stereomobilen Bindungen,
$R_2$ Wasserstoff, Methyl oder Ethyl und
x, y und z 0 oder ganze Zahlen, wobei die Summe von y + z mindestens 1 ist.

2. Kunstharz nach Anspruch 1 der Formel (I), in der A, $A_1$ Sauerstoff und die Brücke mit den stereomobilen Bindungen eine Etherbrücke ist.

3. Kunstharz nach Anspruch 1 oder 2 der Formel (I), in der R, $R_1$ ein gegebenenfalls substituierter, gesättigter aliphatischer Kohlenwasserstoffrest ist, dessen Hauptkette 1 bis 10 Kohlenstoffatome aufweist.

4. Kunstharz nach Anspruch 1 oder 2 der Formel (I), in der R, $R_1$ Kohlenwasserstoffreste, die untereinander über Heteroatome gebunden sind, die eine Brücke mit stereomobilen Bindungen bilden, wie eine Ether- oder Sulfonbrücke, sind.

5. Kunstharz nach Anspruch 3 oder 4 der Formel (I), in der R, $R_1$ unter folgenden Gruppen gewählt werden :

a) $-(-CH_2-)_n$ mit n 1 bis 10,
b) $-(-CH_2-CH_2-O-)_mCH_2-CH_2-$ mit m 1 bis 5,
c) 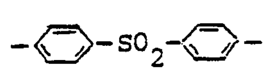

6. Kunstharz nach einem der Ansprüche 1 bis 5, dadurch gekennzeichnet, daß der ausgefällte Dialdehyd die folgende Formel (II) aufweist :

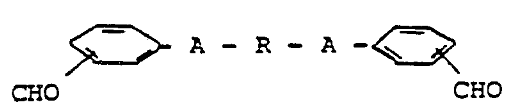 (II)

wobei A und R die oben angegebene Bedeutung haben.

7. Kunstharz nach einem der Ansprüche 1 bis 6, dadurch gekennzeichnet, daß das ausgefällte Pyridinderivat die folgende Formel (III) aufweist :

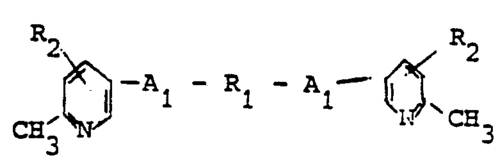 (III)

wobei $A_1$, $R_1$ und $R_2$ die oben angegebene Bedeutung haben.

8. Kunstharz nach einem der vorstehenden Ansprüche, dadurch gekennzeichnet, daß das Polykondensationsprodukt aus einem Dialdehydgemisch mit mindestens einem ausgefällten Derivat der Formel (II) erhalten wird.

9. Kunstharz nach Anspruch 8, dadurch gekennzeichnet, daß die Molkonzentration des Dialdehyds der Formel (II) im ausgefällten Dialdehydgemisch unter 50 % liegt.

10. Kunstharz nach Anspruch 8 oder 9, dadurch gekennzeichnet, daß das ausgefällte Dialdehydgemisch Terephthalaldehyd enthält.

11. Kunstharz nach einem der vorstehenden Ansprüche, dadurch gekennzeichnet, daß das Polykondensationsprodukt aus einem Pyridinderivatgemisch mit einem ausgefällten Pyridinderivat der Formel (III) erhältlich ist.

12. Kunstharz nach Anspruch 11, dadurch gekennzeichnet, daß das ausgefällte Pyridinderivatgemisch Collidin enthält.

13. Kunstharz nach Anspruch 11 oder 12, dadurch gekennzeichnet, daß die Molkonzentration der Pyridinderivate der Formel (III) in dem ausgefällten Pyridinderivatgemisch unter 50 % liegt.

14. Verbundmaterial, wie ein Schichtpreßstoff aus einem Träger, wie einem Kohlenstoff- oder Glasgewebe, einer Matte oder Fasern, der mit einem Kunstharz imprägniert ist, dadurch gekennzeichnet, daß einer der Bestandteile des Kunstharzes ein Kunstharz nach einem der Ansprüche 1 bis 13 ist.